# EUROPÄISCHE PATENTSCHRIFT

(11) **EP 0 394 747 B1**
(45) Veröffentlichungstag und Bekanntmachung des Hinweises auf die Patenterteilung: **30.11.1994**
(21) Anmeldenummer: 90106857.7
(22) Anmeldetag: 10.04.1990
(51) Int. Cl.: H04M 1/02, H04B 1/38, H04Q 7/00

(54) **Halterung für ein Funkgerät**
Holding device for radiotelephone
Fixation pour un appareil radio

(30) Priorität: 24.04.1989 DE 8905149 U
(43) Veröffentlichungstag der Anmeldung: 31.10.1990
(73) Patentinhaber: SIEMENS AKTIENGESELLSCHAFT, 80333 München (DE)
(72) Erfinder: Meschenmoser, Friedrich, Dipl.-Ing. (FH), D-8000 München 90 (DE); Grassl, Erwin, D-8193 St. Heinrich (DE); Stögmüller, Rupert, Dipl.-Ing. (FH), D-8000 München 83 (DE)

(56) Entgegenhaltungen:
- EP-A- 0 168 216
- GB-A- 2 206 765
- US-A- 3 873 757

## Beschreibung

Die Erfindung bezieht sich auf eine Halterung für ein Funkgerät, insbesondere für die Befestigung eines Autofunkgerätes, bei der ein als auf einer Schmalseite offene Schale ausgebildeter Grundkörper vorgesehen ist.

Derartige Halterungen sind insbesondere bei Autofunkgeräten notwendig und müssen das darunter befindliche Gerät auch bei großen Erschütterungen zuverlässig halten.

Der Erfindung liegt die Aufgabe zugrunde, für diesen Zweck eine Halterung anzugeben, die eine leichte Befestigung mit wenigen Handgriffen als auch eine leichte Entnahme des Grundgerätes für mobile Zwecke erlaubt.

Diese Aufgabe wird gemäß der Erfindung dadurch gelöst, daß an den inneren Längsseitenwänden des Grundkörpers mehrere hakenförmige längliche Elemente in einem solchen Mindestabstand voneinander angeordnet sind, daß am Boden des Gerätes beidseits des unteren Randes von dessen Längsseitenwänden nach außen ragende kurze schienenförmige Nasen zwischen die Haken beim Aufsetzen des Gerätes auf den Grundkörper eingreifen können und daß durch Längsverschiebung des Gerätes zum Grundkörper die Nasen in die Haken eingreifen, wobei im Boden des Grundkörpers noch eine in Längsrichtung verlaufende Schiene angeordnet ist, die durch Druckfedern gegen den Boden verspannt ist und die bei der Längsverschiebung beim Einsetzen durch Verspannung des Gerätes gegen die Haken und Einschnappen der Schiene in eine entsprechende Längsnut im Gehäuseboden für die endgültige Arretierung sorgt.

Eine Halterung der eingangs genannten Art ist bereits aus der EP-A-168216 bekannt, jedoch soll bei dieser bekannten Halterung nicht das Problem einer leichten Befestigung bzw. leichten Entnahme mit wenigen Handgriffen bei zuverlässigem Halt auch bei Erschütterungen gelöst werden. Vielmehr geht es bei der bekannten Halterung darum, ein Bedienteil in umgekehrter Gebrauchslage zu halten.

Weitere vorteilhafte Ausgestaltungen der Erfindung finden sich in den Unteransprüchen.

Nachstehend wird die Neuerung anhand eines in den Figuren gezeigten Ausführungsbeispiels näher erläutert.

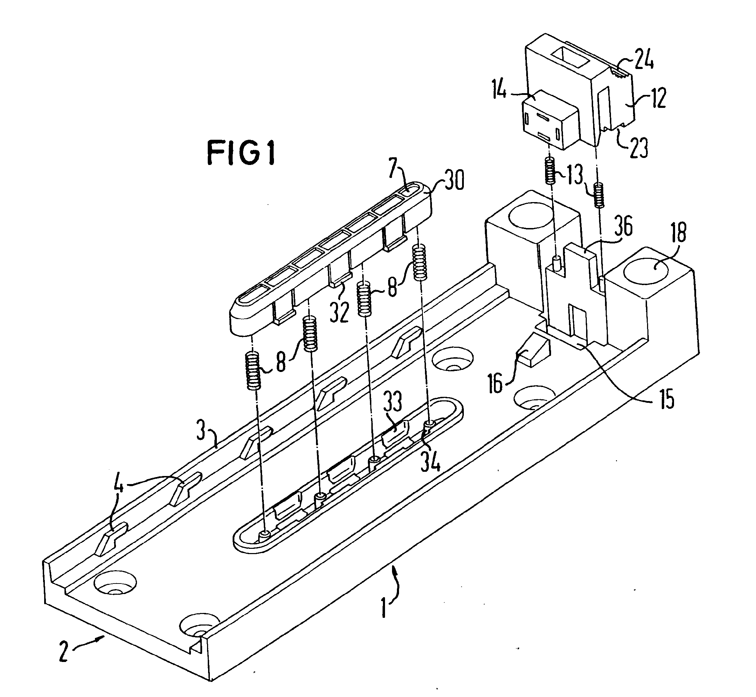

- Die Figur 1: zeigt eine perspektivische Ansicht der Halterung von oben.

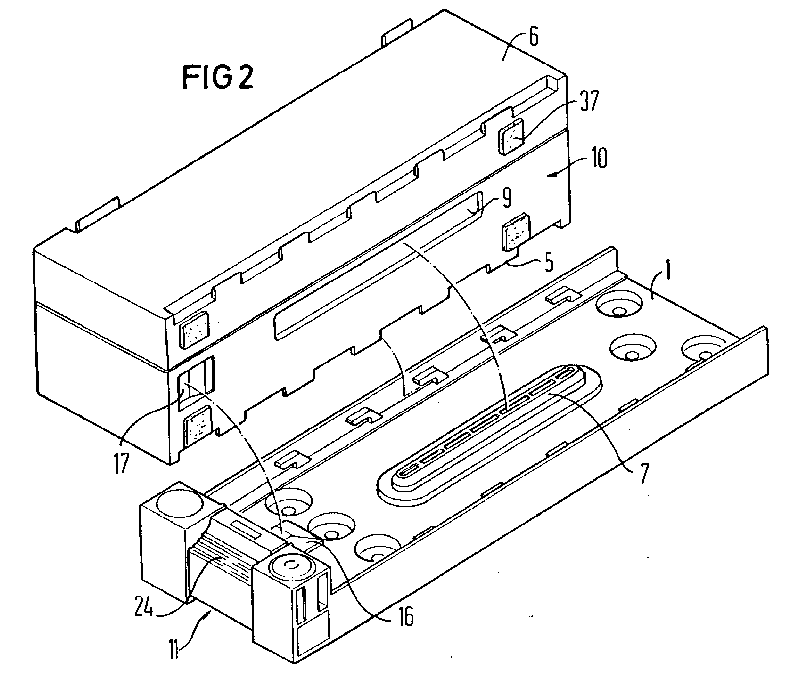

- Die Figur 2: zeigt eine Explosionsdarstellung von Halterung und Gerät.

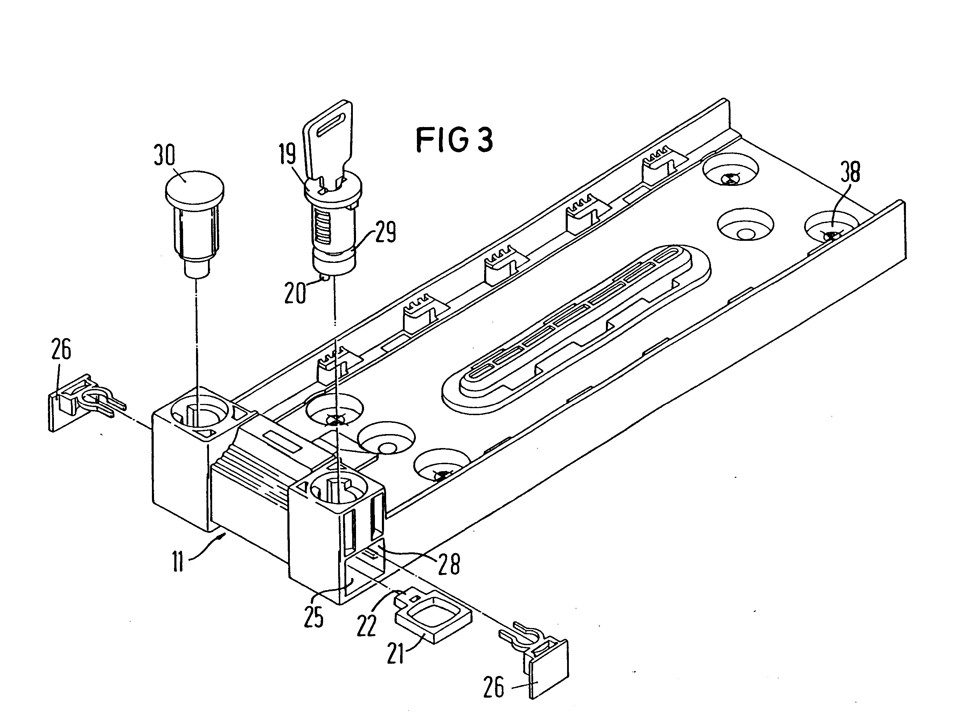

- Die Figur 3: zeigt insbesondere Einzelheiten für die Verriegelung.
- Die Figur 4: zeigt den Boden der Halterung.

Die grundlegende Einheit in der sich Sender und Empfänger für ein solches Funkgerät befinden, ist der Baustein 6. Dieses Gerät 6 wird in eine beispielsweise an der Konsole im Fahrzeug befestigbare Halterung 1 eingesetzt. Der Grundkörper 1 dieser Halterung hat die Form einer flachen auf einer Schmalseite 2 offenen Wanne. Längs der relativ schmalen und niedrigen Seitenwand 3 dieser Wanne sind hakenförmige längliche Elemente 4 angebracht oder zweckmäßigerweise angegossen, da der Grundkörper vorteilhaft aus Kunststoff besteht. Diese hakenförmigen Elemente sorgen im Zusammenhang mit an den Rändern der Unterseite 10 des Gehäuses nach außen angeordneten schienenförmigen Nasen 5 für die Halterung des Gerätes 6 im Grundkörper 1. Das Gerät wird zu diesem Zweck von oben her nahe der geschlossenen Schmalwand 11 des Grundkörpers auf diesen aufgesetzt und dann durch eine Schiebbewegung mit den Elementen 4 verhakt. Die hakenförmigen Elemente sind zu diesem Zweck in gleicher Anzahl wie die schienenförmigen Nasen und im entsprechenden Abstand voneinander angeordnet. Die Haken verlaufen in Richtung der geschlossenen Seitenwand.

Um einen sicheren Halt des Gerätes im Grundkörper zu erreichen, befindet sich im Boden des Grundkörpers eine Schiene 7, die durch Druckfedern 8 gegen die Geräteunterseite verspannbar ist.

Angegossene biegbare Lappen 32 sorgen durch Einhaken in entsprechende Ausnehmungen 33 im Grundkörper dafür, daß die Schiene in diesem federnd gehalten wird. Die Federn sind dazu auf Bolzen 34 aufgesetzt, die in entsprechende Durchbrüche in der Schiene 7 hineinragen, so daß die Schiene vertikal vorgespannt bewegbar gehalten ist. Im Boden 10 des Gehäuses 6 ist an entsprechender Stelle in der Endstellung der Arretierung eine geeignet gestaltete Längsnut 9 vorgesehen. Um beim Einschieben das Einschnappen der Schiene 7 in diese Längsnut zu erleichtern, ist die Schiene rund um ihren oberen Rand angefast und zwar vorzüglich in einem Winkel von etwa 30 bis 45°. Die Längsnut kann auch entgegen der Darstellung ohne Längsbegrenzung nur durch beidseits der Schiene verlaufende überhöhte Rippen gebildet werden, die die Seitenstabilität gewährleisten, da ja die Nase 14 samt Verriegelung 12/24 und Haken 4 die Längsstabilität bewirken. Das Gerät kann so auf der Oberseite von der geschlossenen Seitenwand 11 her aufgesetzt und durch eine kurze Länsbewegung eingerastet werden.

Um ein ungewolltes Ausrasten auch bei starken Erschütterungen zu vermeiden, ist in der etwa quaderförmig gestalteten geschlossenen schmalen Seitenwand 11 des Grundkörpers eine Verriegelung vorgesehen. Diese besteht aus einem Klotz, der als Verriegelungstaste 24 ausgebildet ist. Der Klotz hat eine Führungsnut 35, in die eine Führungsschiene 36 in der Seitenwand eingreifen kann, so daß er vertikal bewegbar ist. Durch Federn 13 ist der Verriegelungsklotz 12 vertikal verspannbar und durch eine Rastnase ist er gegen Herausfallen gesichert. Der Klotz hat einen nasenförmigen Ansatz 14, der vorzugsweise aus elastischem Material besteht. Wird das Gerät 6 in der Einführungsstellung aufgesetzt, so wird der Ansatz 14 in eine entsprechende Öffnung 15 im Grundkörper eingedrückt und schnappt nach Erreichen der Endstellung durch Längsverschiebung des Gerätes aus dieser Öffnung heraus, so daß das Gerät zusätzlich neben der Schiene 7 in Axialrichtung fest gehalten wird. Gegenüber dem Ansatz 14 ist am Grundkörper eine Nase 16 vorgesehen, die in eine entsprechende Vertiefung 17 im Gehäuseboden 10 in der Arretierungsstellung eingreift. Das Gerät wird auf diese Weise äußerst sicher im Grundkörper gehalten. Es können zusätzlich elastische Elemente 37 zur Stoßdämpfung am Boden dieses Gehäuses vorgesehen werden. Zur Sicherung gegen unerlaubte Entnahme des Gerätes aus dem Grundkörper ist schließlich eine Sperrvorrichtung für die Verriegelungstaste 24 bzw. 12 vorgesehen. Diese Verriegelung besteht aus einem Zylinderschloß 19, das sich in eine zylindrische Ausnehmung 18 der Wand 11 einsetzen läßt. Solche zylindrische Ausnehmungen befinden sich beidseits der mittig angeordneten Verriegelung 12. Der exzentrische Schließzapfen 20 greift in einen Sperriegel 21 ein, der sich unterhalb des Zylinderschlosses 19 in der Öffnung 18 befindet. Er hat eine derartige Ausnehmung für seine Nase 22, die im Sperrzustand in eine seitliche Ausnehmung 23 der Verriegelung eingreift und damit das Niederdrücken und die Entsperrung verhindert. Zur Abdeckung der seitlichen Ausnehmung 25 für die Verriegelungstaste ist eine Abdeckplatte 26 vorgesehen, die einen zangenförmigen Ansatz 27 hat. Dieser zangenförmige Ansatz greift in eine Radialnut 29 des Zylinderschlosses 19 ein und verhindert ein Herausfallen bzw. ein Herausziehen des Zylinderschlosses in jedem Fall.

Die gegenüberliegende zylindrische Ausnehmung 18 kann durch einen Blindstopfen 30 verschlossen werden und entsprechend ist eine Abdeckplatte 26 vorgesehen.

Im Boden des Grundkörpers sind versenkte Befestigungsbohrungen 38 für kräftige Befestigungsschrauben im Fahrzeug vorgesehen.

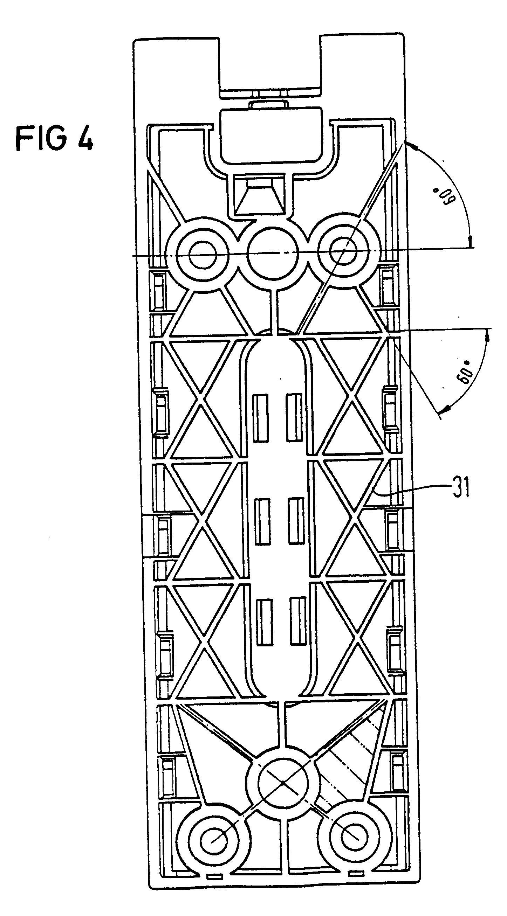

Die Figur 4 zeigt schließlich einen auf höchste Stabilität ausgelegten Boden, das heißt, die Unterseite der Wanne 1. Dort sind zum Zwecke der höchstmöglichen Verwindungssteifigkeit wabenförmige Prägungen 31 vorgesehen, die die beste Stabilität des Kunststoffkörpers der Wanne gewährleisten.

Die gesamte Einheit erlaubt eine stabile Befestigung der Grundeinheit des Funkgerätes mit wenigen Handgriffen sowie eine entsprechende Aufhebung der Verriegelung zur Entnahme des Gerätes.

Der Grundkörper 1 samt Schiene 7 ist derart auf dem Gehäuseboden 10 des Gerätes 6 abgestimmt, daß ein seitenverkehrtes Einsetzen des Gerätes in den Grundkörper ausgeschlossen ist.

## Patentansprüche

1. Halterung für ein Funkgerät, insbesondere für die Befestigung eines Autofunkgerätes, bei der ein als auf einer Schmalseite (2) offene Schale ausgebildeter Grundkörper (1) vorgesehen ist,
**dadurch gekennzeichnet**,
daß an den inneren Längsseitenwänden (3) des Grundkörpers (1) mehrere hakenförmige längliche Elemente (4) in einem solchen Mindestabstand voneinander angeordnet sind, daß am Boden des Gerätes beidseits des unteren Randes von dessen Längsseitenwänden nach außen ragende kurze schienenförmige Nasen (5) zwischen die Haken beim Aufsetzen des Gerätes (6) auf den Grundkörper (1) eingreifen können und daß durch Längsverschiebung des Gerätes zum Grundkörper die Nasen in die Haken eingreifen, wobei im Boden des Grundkörpers noch eine in Längsrichtung verlaufende Schiene (7) angeordnet ist, die durch Druckfedern (8) gegen den Boden verspannt ist und die bei der Längsverschiebung beim Einsetzen durch Verspannung des Gerätes gegen die Haken und Einschnappen der Schiene in eine entsprechende Längsnut (9) im Gehäuseboden (10) für die endgültige Arretierung sorgt.

2. Halterung nach Anspruch 1,
**dadurch gekennzeichnet**,
daß die Haken (4) zur geschlossenen Schmalseitenwand (11) des wannenförmigen Grundkörpers (1) hin offen sind und daß in dieser Wand eine Verriegelung (12) vertikal federverspannt (13) bewegbar angeordnet ist, die als Riegel einen vorzugsweise elastischen nasenförmigen Ansatz (14) hat, der beim Aufsetzen des Gerätes in eine Öffnung (15) im Grundkörper gedrückt wird und am Ende der Längsverschiebungsphase hochschnappt und die endgültige Verriegelung besorgt.

3. Halterung nach einem der Ansprüche 1 oder 2,
**dadurch gekennzeichnet**,
daß zusätzlich zu den Haken (4) und der Schiene (7) gegenüber dem Riegel in Schieberichtung noch eine als Anschlag aus gebildete aus der Bodenfläche der Wanne hervorragende Nase (16) vorgesehen ist, die in der Arretierungsstellung in eine entsprechende Vertiefung (17) am Boden des Gerätes eingreift.

4. Halterung nach einem der Ansprüche 2 oder 3,
**dadurch gekennzeichnet**,
daß die geschlossene Seitenwand (11) mit der Verriegelung (12) quaderförmig gestaltet ist und mittig den Sperriegel (14) beinhaltet, während beidseits dieser Riegelanordnung zylindrische Ausnehmungen (18) angebracht sind zur Aufnahme wenigstens eines Zylinderschlosses (19), dessen Schließzapfen (20) in einen seitlich durch ihn verschiebbaren Sperriegel (21) eingreift, dessen Nase (22) im gesperrten Zustand in eine seitliche Ausnehmung (23) der Verriegelung (12) eingreift und eine Aufhebung der Verriegelung durch Druck auf die Verriegelungstaste (24) verhindert.

5. Halterung nach Anspruch 4,
**dadurch gekennzeichnet**,
daß für die Abdeckung der Ausnehmung (25) für den Sperriegel (22) eine Abdeckplatte (26) vorgesehen ist, die einen elastischen zangenförmigen Ansatz (27) hat, der in eine Führung (28) und in eine Radialnut (29) des Zylinderschlosses (19) eingreifend eine Entnahme des Schlosses auch im entsperrten Zustand verhindert.

6. Halterung nach Anspruch 1,
**dadurch gekennzeichnet**,
daß die Schiene an der Oberseite ringsum gefast ist insbesondere mit einer Schräge (30) von 30 bis 45° gegen die Waagerechte.

7. Halterung nach einem der vorhergehenden Ansprüche,
**dadurch gekennzeichnet**,
daß die Unterseite des Grundkörpers zum Erreichen größtmöglicher Stabilität wabenförmig (31) ausgenommen ist (Figur 4).

## Claims

1. Holder for a transceiver, preferably for mounting a mobile transceiver, in which a basic body (1) is provided which is constructed as a shell which is open on a narrow side (2), characterized in that a plurality of hook-shaped elongate elements (4) are arranged on the inner longitudinal side walls (3) of the basic body (1) at such a minimum distance from each other that short rail-shaped lugs (5) which at the bottom of the device project outwards on the two sides of the lower edge from its longitudinal side walls can engage between the hooks when the device (6) is placed on the basic body (1), and in that the lugs engage in the hooks by longitudinally displacing the device with respect to the basic body, a rail (7) running in the longitudinal direction being additionally arranged in the bottom of the basic body, which rail is braced with respect to the bottom by pressure springs (8) and ensures the final locking during the longitudinal displacement during the insertion by bracing the device with respect to the hooks and snapping the rail into place in a corresponding longitudinal groove (9) in the housing bottom (10).

2. Holder according to Claim 1, characterized in that the hooks (4) are open in the direction of the closed narrow side wall (11) of the trough-shaped basic body (1) and in that a lock (12) is arranged in this wall such that it can be moved vertically in a spring-loaded (13) manner and has as a bolt a preferably elastic lug-shaped attachment (14) which, when the device is mounted, is pressed into an opening (15) in the basic body and snaps upwards at the end of the longitudinal displacement phase and ensures the final locking.

3. Holder according to one of Claims 1 and 2, characterized in that, in addition to the hooks (4) and the rail (7), opposite the bolt there is also provided, in the sliding direction, a lug (16) which projects from the bottom surface of the trough and is constructed as a stop and engages in the locking position in a corresponding depression (17) at the bottom of the device.

4. Holder according to one of Claims 2 and 3, characterized in that the closed side wall (11) with the lock (12) is constructed in the shape of a parallelepiped and contains the locking bolt (14) in the centre, while on the two sides of this bolt arrangement cylindrical recesses (18) are provided for receiving at least one cylinder lock (19) whose locking pin (20) engages in a locking bolt (21) which can be displaced laterally by said locking pin (20) and whose lug (22) engages in the locked state in a lateral recess (23) of the lock (12) and prevents the locking from being neutralized by pressure on the lock key (24).

5. Holder according to Claim 4, characterized in that for covering the recess (25) for the locking bolt (21) a cover plate (26) is provided which has an elastic tongs-shaped attachment (27) which, while engaging in a guide (28) and in a radial groove (29) of the cylinder lock (19), prevents a removal of the lock even in the unlocked state.

6. Holder according to Claim 1, characterized in that the rail is circumferentially bevelled at the topside, preferably with a bevel (30) of 30 to 45° with respect to the horizontal.

7. Holder according to one of the preceding claims, characterized in that the underside of the basic body is recessed in the shape (31) of a honeycomb to achieve maximum stability (Figure 4).

## Revendications

1. Dispositif de fixation pour un appareil radio, notamment pour la fixation d'un autoradio, dans lequel il est prévu un corps de base (1) réalisé sous la forme d'une coque ouverte sur un petit côté (2),
caractérisé par le fait
que plusieurs éléments allongés (4) en forme de crochets sont disposés sur les parois intérieures (3) des côtés longitudinaux du corps de base (1), à une distance réciproque minimale telle que, sur le fond de l'appareil, des deux côtés du bord inférieur des parois de ses côtés longitudinaux, de courts becs en forme de rails (5), qui font saillie vers l'extérieur, peuvent s'engager entre les crochets lors de la mise en place de l'appareil (6) sur le corps de base (1), et que sous l'effet d'un déplacement longitudinal de l'appareil par rapport au corps de base, les becs s'engagent dans les crochets, alors que dans le fond du corps de base est en outre disposé un rail (7) qui s'étend dans la direction longitudinale et qui est repoussé contre le fond par des ressorts de pression (8) et qui, lors du déplacement longitudinal lors de l'insertion, assure le blocage définitif, sous l'effet du serrage de l'appareil contre les crochets et sous l'effet de l'encliquetage du rail dans une rainure longitudinale correspondante (9) ménagée dans le fond (10) du boîtier.

2. Support suivant la revendication 1, caractérisé par le fait que les crochets (4) sont ouverts en direction de la paroi fermée (11) des petits côtés du corps de base en forme de cuvette (1) et que dans cette paroi est disposé de manière à être déplaçable, en étant repoussé verticalement (13) par un ressort, un dispositif de verrouillage (12) qui possède, en tant que verrou, un appendice saillant en forme de bec de préférence élastique (14), qui est repoussé dans une ouverture (15) ménagée dans le corps de base, lors de la mise en place de l'appareil et s'encliquette en se relevant à la fin de la phase de déplacement longitudinal et assure le verrouillage définitif.

3. Support suivant l'une des revendications 1 ou 2, caractérisé par le fait qu'en plus des crochets (4) et du rail (7) est en outre prévu, en vis-à-vis du verrou, dans la direction de déplacement, un bec (16) agencé sous la forme d'une butée qui fait saillie à partir de la surface du fond de la cuvette et, dans la position de blocage, s'engage dans le renfoncement correspondant (17) ménagé dans le fond de l'appareil.

4. Support suivant l'une des revendications 2 ou 3, caractérisé par le fait que la paroi latérale fermée (11) pourvue du système de verrouillage (12) est agencée avec une forme parallélépipédique et comporte, en son centre, le verrou de blocage (14), tandis que des deux côtés de ce dispositif de verrouillage sont ménagés des évidements cylindriques (18) servant à loger au moins une serrure cylindrique (19), dont le téton de fermeture (20) s'engage dans un verrou de blocage (21) déplaçable latéralement par ces tétons et dont la languette (22) s'engage, à l'état bloqué, dans un évidement latéral (23) du système de verrouillage (12) et empêche une suppression du verrouillage sous l'effet d'une pression appliquée à la touche de verrouillage (24).

5. Support suivant la revendication 4, caractérisé par le fait que pour la fermeture de l'évidement (25) pour le verrou de blocage (22) il est prévu une plaque de fermeture (26), qui possède un appendice saillant en forme de pince élastique (27), qui, en s'engageant dans un guide (28) et dans une rainure radiale (29) de la serrure cylindrique (19), empêche un retrait de la serrure, également à l'état déverrouillé.

6. Support suivant la revendication 1, caractérisé par le fait que le rail est biseauté sur le pourtour de sa face supérieure, et possède notamment une inclinaison (30) comprise entre 30 et 45° par rapport à l'horizontale.

7. Support suivant l'une des revendications précédentes, caractérisé par le fait que la face inférieure du corps de base est évidée à la manière d'un nid d'abeilles (31) de manière à obtenir la stabilité maximale possible (figure 4).
